# EUROPÄISCHE PATENTSCHRIFT

(11) **EP 2 198 258 B1**
(45) Veröffentlichungstag und Bekanntmachung des Hinweises auf die Patenterteilung: **29.06.2011**
(21) Anmeldenummer: 08804999.4
(22) Anmeldetag: 02.10.2008
(51) Int. Cl.: G01M 13/02

(54) **ANTRIEBSEINHEIT ZUR PRÜFUNG VON GETRIEBEN UND VORRICHTUNG ZUR PRÜFUNG VON GETRIEBEN**
DRIVE UNIT FOR TESTING TRANSMISSIONS AND DEVICE FOR TESTING TRANSMISSIONS
UNITÉ D'ENTRAÎNEMENT POUR LE CONTRÔLE DE TRANSMISSIONS, ET DISPOSITIF DE CONTRÔLE DE TRANSMISSIONS

(30) Priorität: 10.10.2007 DE 102007048530
(43) Veröffentlichungstag der Anmeldung: 23.06.2010
(73) Patentinhaber: ZF Friedrichshafen AG, 88038 Friedrichshafen (DE)
(72) Erfinder: ALBRECHT, Elmar, 88079 Kressbronn (DE)
(86) Internationale Anmeldenummer: PCT/EP2008/063214
(87) Internationale Veröffentlichungsnummer: WO 2009/050043

(56) Entgegenhaltungen:
- WO-A-2005/119198
- FR-A- 2 824 637
- US-A- 5 664 916

## Beschreibung

Die Erfindung betrifft eine Antriebseinheit zur Prüfung von Getrieben nach dem Oberbegriff des Patentanspruches 1 sowie eine Vorrichtung zur Prüfung von Getrieben nach dem Oberbegriff des Patentanspruches 14.

Es ist bekannt, dass Getriebe nach ihrer Montage auf Funktion und Belastbarkeit geprüft werden, was mit entsprechenden Prüfeinrichtungen erfolgt. Durch die WO 2005/119198 A1 der Anmelderin wurde eine Vorrichtung zum Prüfen von Getrieben bekannt, mittels welcher Getriebe am Ende des Montageprozesses geprüft werden.Die bekannte Vorrichtung weist ein in der Höhe verstellbares Portal auf, an welchem zu beiden Seiten Antriebs- und Abtriebsmotoren angeordnet sind, die ihrerseits jeweils mit parallel versetzt angeordneten Antriebs- bzw. Abtriebspinolen verbunden sind. Die An- und Abtriebspinole werden mit der An- bzw. Abtriebswelle des zu prüfenden Getriebes durch Andocken und Kuppeln verbunden. Danach erfolgt der Prüflauf. Nach Abschluss des Prüflaufes werden die An- und Abtriebspinolen wieder vom Getriebe getrennt. Die bekannte Prüfvorrichtung weist im Hinblick auf die Herstellungskosten sowie im Hinblick auf einen flexiblen Einsatz im Fertigungsprozess noch Potenziale auf.

Weitere Vorrichtungen zum Prüfen von Getrieben bzw. Getriebeprüfstände wurden durch die DE 195 37 639 A1 der Anmelderin, die DE 39 05 938 A1, die FR 2 824 637 A1 und die DE 43 28 537 A1 bekannt.

Es ist Aufgabe der Erfindung, eine Vorrichtung zur Prüfung von Getrieben zu vereinfachen, insbesondere eine vereinfachte und kostengünstige Antriebseinheit für die Prüfung von Getrieben zu schaffen.

Die Aufgabe der Erfindung wird durch die Merkmale des Patentanspruches 1 gelöst. Vorteilhafte Ausgestaltungen ergeben sich aus den abhängigen Ansprüchen.

Erfindungsgemäß ist der Elektromotor auf der Antriebswelle angeordnet und als Spindelmotor ausgebildet. Ein Spindelmotor ist ein handelsüblicher Elektromotor, der direkt auf der Antriebswelle angeordnet ist. Damit wird der Vorteil einer kompakten Bauweise für die Antriebseinheit erreicht. Außerdem ergeben sich Kostenvorteile, da Übertragungsmittel zwischen Antriebsmotor und versetzt angeordneter Pinole (vgl. Stand der Technik) entfallen. Antriebswelle und Elektromotor der Antriebseinheit sind somit koaxial zur Antriebswelle des zu prüfenden Getriebes angeordnet. Nach einer vorteilhaften Ausgestaltung ist die Antriebswelle als Hohlwelle ausgebildet, sodass ein Zugang zum Getriebeprüfling gegeben ist. Insbesondere ist in der Hohlwelle eine Betätigungsstange angeordnet, welche vorzugsweise über einen pneumatischen oder hydraulischen Stellmotor betätigt wird. Dadurch kann ein Kupplungselement betätigt werden.

Der Spindelmotor zeichnet sich durch eine kompakte Bauweise aus, indem der Rotor direkt auf der Hohlwelle angeordnet und der Stator in einem Motorgehäuse angeordnet ist. Vorzugsweise sind in den Stator Kühlkanäle zur Kühlung der Wicklungen im Stator integriert. Die Hohlwelle ist vorteilhaft in stirnseitig angeordneten Deckelscheiben, die somit auch als Lagerschilde fungieren, gelagert.

Die Antriebseinheit kann vorzugsweise an einem Traggerüst, beispielsweise in Form eines Portals, befestigt werden, wobei eine Höhen- und Seitenverstellung zum Heranführen der Antriebseinheit an den Getriebeprüfling möglich ist. Alternativ kann die Antriebseinheit an einem Handhabungsgerät, insbesondere einem Knickarm eines Roboters befestigt werden. Damit wird eine vielseitige Bewegungsmöglichkeit für die Antriebseinheit erreicht, die somit nicht nur höhen- und seitenverstellbar, sondern auch schwenkbar ist. Damit ergeben sich für die Durchführung der Getriebeprüfung vielfältige Einsatzmöglichkeiten.

Vorteilhaft kann die Antriebseinheit sowohl für den Antrieb als auch für den Abtrieb des Getriebes, z. B. bei einer Schubsimulation eingesetzt werden. Die Antriebseinheit ist somit als Modul vielseitig verwendbar, wodurch sich Kosteneinsparungen ergeben.

Nach einer weiteren vorteilhaften Ausführungsform weist die Antriebseinheit eine Hubeinrichtung auf, mittels welcher die Antriebseinheit in Längsrichtung der Antriebswelle (Hohlwelle) verschiebbar ist. Damit kann die Antriebseinheit an den Getriebeprüfling, d. h. dessen An- und Abtriebsseite heran und wieder weggefahren werden, d. h. zum Andocken und Trennen.

Die Aufgabe der Erfindung wird auch durch eine Vorrichtung mit den Merkmalen des Patentanspruches 14 gelöst. Vorteilhaft bei dieser Kombination ist, dass ein an sich bekanntes Portal oder ein an sich bekanntes Handhabungsgerät mit der erfindungsgemäßen Antriebseinheit, einem Antriebsmodul, bestückt werden kann, wobei das Antriebsmodul an den jeweiligen Getriebetyp angepasst werden kann. Die Montage des Antriebsmoduls und ebenso die Demontage oder der Austausch gegen ein anderes Antriebsmodul erfolgen einfach und schnell. Damit wird eine hohe Flexibilität der Prüfvorrichtung erreicht.

Ausführungsbeispiele der Erfindung sind in der Zeichnung dargestellt und werden im Folgenden näher beschreiben. Es zeigen
Fig. 1 einen Längsschnitt durch die erfindungsgemäße Antriebseinheit,
Fig. 2a, 2b perspektivische Darstellungen der Antriebseinheit mit und ohne Gehäuseverkleidung,
Fig. 3a eine perspektivische Darstellung der Antriebseinheit mit Blick auf eine Hubeinrichtung,
Fig. 3b eine perspektivische Ansicht der Hubeinrichtung,
Fig. 4a, 4b verschiedene perspektivische Darstellungen eines Traggerüstes mit der Antriebseinheit und
Fig. 5 eine perspektivische Darstellung eines Roboters mit Knickarm und daran befestigter Antriebseinheit.

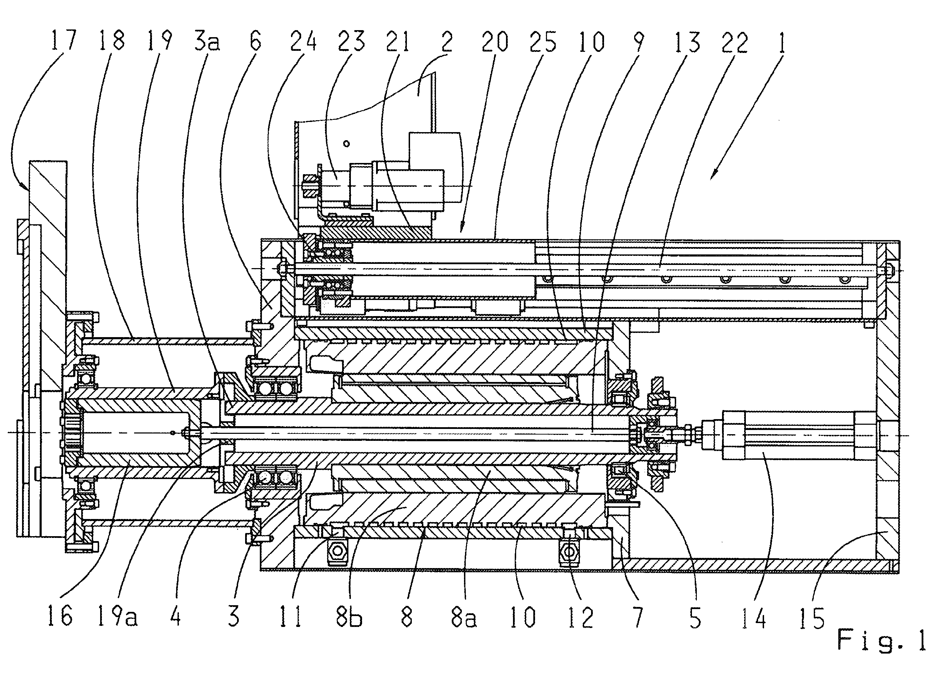

Fig. 1 zeigt eine Antriebseinheit 1, welche an einem Haltearm 2 eines nicht dargestellten Traggerüstes für die Prüfung von Getrieben angeordnet ist. Die Antriebseinheit 1 weist eine als Hohlwelle ausgebildete Antriebswelle 3 auf, welche über Wälzlager 4, 5 in Deckscheiben 6, 7 gelagert ist (teilweise auch als Lagerschilde bezeichnet). Die Antriebswelle 3 wird von einem Elektromotor 8, einem so genannten Spindelmotor, angetrieben, welcher einen direkt auf der Hohlwelle 3 befestigten Rotor 8a und einen als Rundkörper ausgebildeten Stator 8b aufweist. Der Stator 8b ist in einem zylinderförmigen Motorgehäuse 9 aufgenommen, welches sich stirnseitig an den beiden Deckscheiben 6, 7 abstützt. In den Stator 8b sind auf dessen äußerer Umfangsfläche Kühlkanäle 10 integriert, welche über Bohrungen 11, 12 mit einem nicht dargestellten Kühlsystem in Verbindung stehen. Innerhalb der Hohlwelle 3 ist eine Betätigungsstange 13 angeordnet, welche längsverschiebbar geführt und von einem pneumatischen oder hydraulischen Stellmotor 14 betätigt wird. Der Stellmotor 14 stützt sich an einer Rückwand 15 der Antriebseinheit 1 ab. Die Betätigungsstange 13 ragt stirnseitig aus der Hohlwelle 3 heraus und ist mit einem Kupplungselement 16 verbunden. Die Antriebseinheit 1 weist eine Spann- oder Andockeinrichtung 17 auf, welche über ein Rohrstück 18 mit der vorderen Deckscheibe 6 verbunden ist. Die Hohlwelle 3 kann stirnseitig über formschlüssige Elemente 3a (Klauen) mit dem Kupplungselement 16 verbunden werden. Das Kupplungselement 16 ist in einer drehbar angeordneten Hülse 19 angeordnet, welche stirnseitig über formschlüssige Elemente 19a mit der Hohlwelle 3 in Eingriff gebracht werden kann.

Die Antriebseinheit 1 umfasst ferner eine Hubeinrichtung 20, welche - in der Zeichnung - oberhalb des Motorgehäuses 9 angeordnet und an der äußeren Deckscheibe 6 sowie der Rückwand 15 befestigt ist. Die Hubeinrichtung 20 weist eine Flanschplatte 21 auf, mittels welcher die gesamte Antriebseinheit 1 an dem Tragarm 2 befestigt ist. Die Hubeinrichtung 20 weist eine an der Deckscheibe 6 und der Rückwand 15 befestigte Spindel 22 auf, auf welcher eine über einen Stellmotor 23 antreibbare Spindelmutter 24 befestigt ist. Die Hubeinrichtung 20 umfasst ferner einen gleitend in Richtung der Spindel 22 angeordneten Schlitten 25, welcher über seitlich angeordnete, hier nicht erkennbare Führungselemente in der Antriebseinheit 1 geführt und gehalten ist. Mittels der Hubeinrichtung 20 ist es möglich, die Antriebseinheit 1 in Relation zu dem Haltearm 2 horizontal, d. h. in Richtung der Längsachse der Hohlwelle 3 zu verschieben und somit an einen hier nicht gestellten Getriebeprüfling heranzufahren und wieder zurückzufahren.

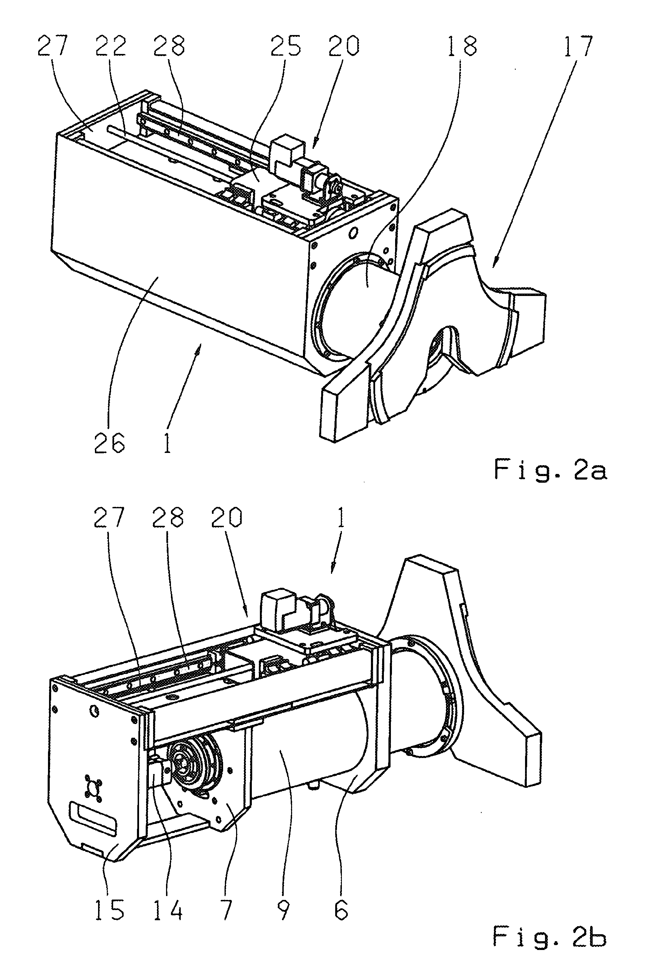

Fig. 2a zeigt die Antriebseinheit 1 in einem Gehäuse 26, welches nach oben offen ist und eine rechteckförmige Öffnung 27 für die Bewegung der Hubeinrichtung 20 respektive des Schlittens 25 aufweist. Weitere Teile sind mit den Bezugszahlen aus Fig. 1 gekennzeichnet, so das Rohrstück 18 und die daran befestigte Spanneinrichtung 17, welche den nicht dargestellten Getriebeprüfling aufnimmt.

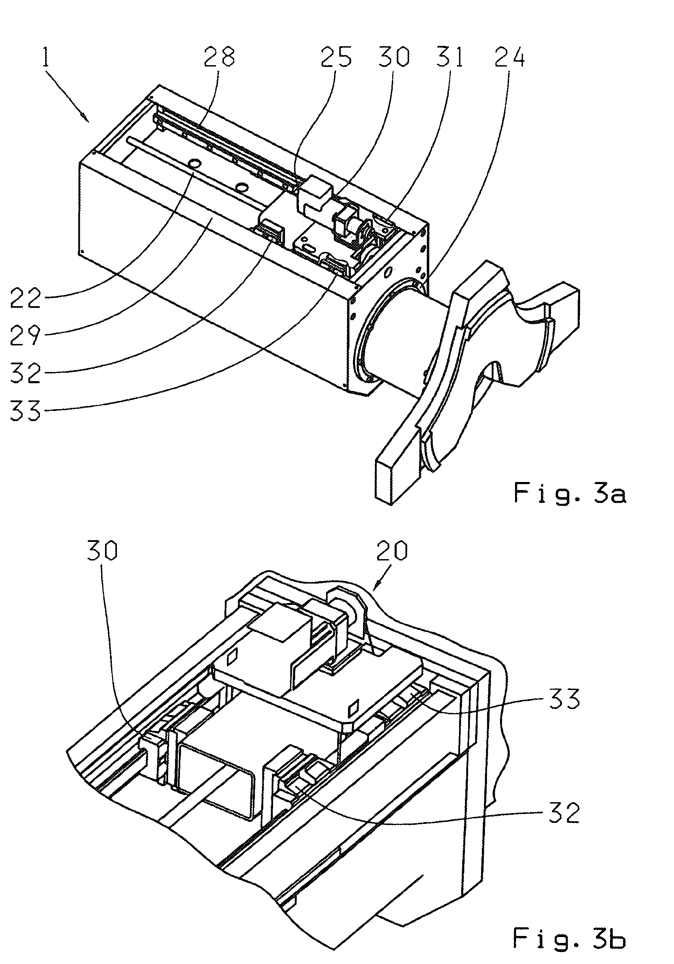

Fig. 2b zeigt die Antriebseinheit 1 ohne Gehäuseverkleidung, sodass das Motorgehäuse 9, die Deckscheiben 6, 7 die Rückwand 15 und der Stellmotor 14 erkennbar sind. Im Bereich der Hubeinrichtung 20 sind in Fig. 2a und 2b ist eine seitlich angeordnete Führungsschiene 28 erkennbar, eine gegenüberliegende, hier nicht sichtbare Führungsschiene 29 ist dagegen in Fig. 3a erkennbar.

Fig. 3a zeigt die Antriebseinheit 1 in einer perspektivischen Darstellung von oben, wobei die Hubeinrichtung 20 teilweise freigelegt ist, sodass der Schlitten 25 erkennbar ist, welcher an seinen Seiten Führungsbacken 30, 31, 32, 33 aufweist, welche auf den Führungsschienen 28, 29 geführt sind. Die Stellbewegung erfolgt - wie oben erwähnt - über die Spindel 22 und die Spindelmutter 24.

Fig. 3b zeigt die Hubeinrichtung 20 in einem vergrößerten Ausschnitt, wobei die Führungsbacken 30, 32, 33 sowie die Führungsschiene 28 deutlich erkennbar sind.

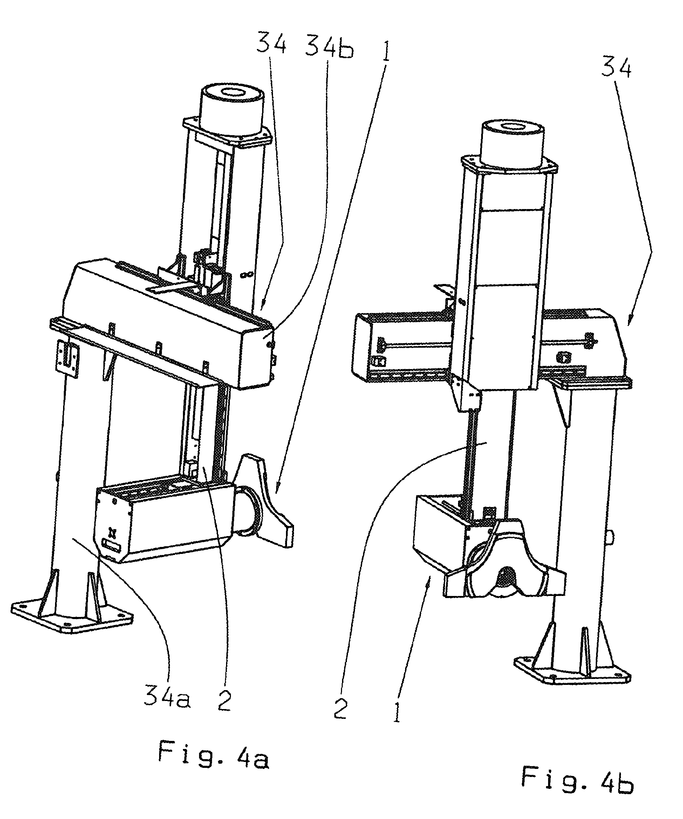

Fig. 4a und Fig. 4b zeigen ein Anwendungsbeispiel der Antriebseinheit 1 in Verbindung mit einem Traggerüst 34, auch Portal 34 genannt. Das Portal 34 weist eine Säule 34a und einen Tragarm 34b auf, an welchem der Haltearm 2 (vgl. Fig. 1) höhen- und seitenverstellbar befestigt ist. Die Antriebseinheit 1 wird als fertiges und austauschbares Modul am unteren Ende des Haltearms 2 befestigt und kann ebenso leicht und schnell demontiert werden.

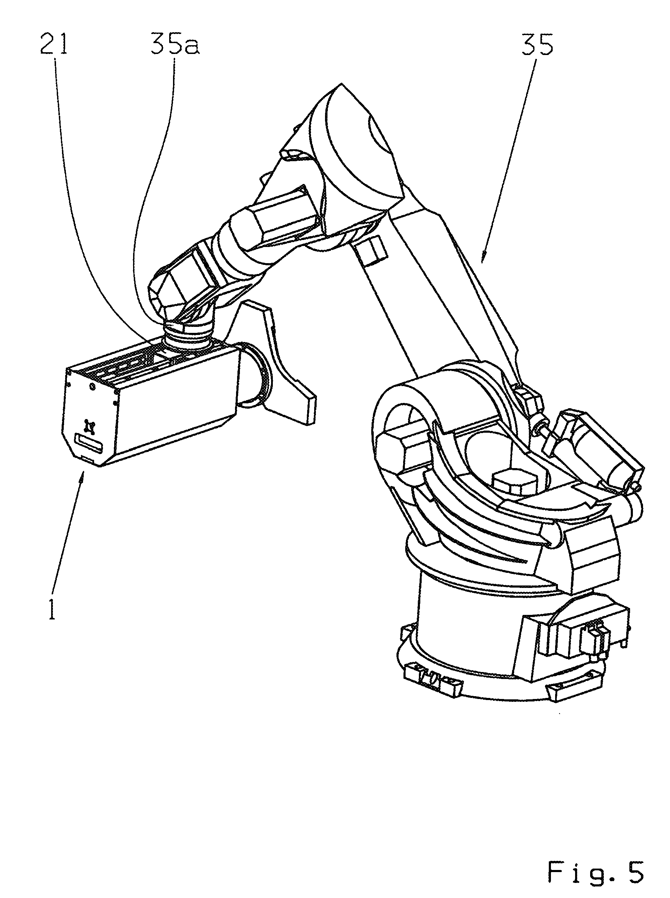

Fig. 5 zeigt ein weiteres Anwendungsbeispiel für die Antriebseinheit 1 in Verbindung mit einem Roboter 35, welcher als Knickarmroboter ausgebildet ist und eine Vielzahl von Dreh- und Schwenkgelenken aufweist. Der Knickarm 35 weist einen Aufnahmekopf 35a auf, an welchem die Antriebseinheit 1 über die Flanschplatte 21 befestigt ist. Durch die Kombination der erfindungsgemäßen Antriebseinheit 1 mit einem als Knickarm ausgebildeten Roboter 35 ergeben sich vielfältige Bewegungsmöglichkeiten, sodass mit diesem Gerät flexibel auf die unterschiedlichsten Situationen und Konfigurationen bei der Prüfung von Getrieben reagiert werden kann.

### Bezugszeichen

- 1: Antriebseinheit
- 2: Haltearm
- 3: Hohlwelle
- 3a: Klaue
- 4: erstes Lager
- 5: zweites Lager
- 6: Deckscheibe, außen
- 7: Deckscheibe, innen
- 8: Spindelmotor
- 8a: Rotor
- 8b: Stator
- 9: Motorgehäuse
- 10: Kühlkanal
- 11: Bohrung
- 12: Bohrung
- 13: Betätigungsstange
- 14: Stellmotor
- 15: Rückwand
- 16: Kupplungselement
- 17: Spann-/Andockeinrichtung
- 18: Rohrstück
- 19: Hülse
- 19a: Klaue
- 20: Hubeinrichtung
- 21: Flanschplatte
- 22: Spindel
- 23: Stellmotor
- 24: Spindelmutter
- 25: Schlitten
- 26: Gehäuse
- 27: Öffnung
- 28: Führungsschiene
- 29: Führungsschiene
- 30: Führungsbacke
- 31: Führungsbacke
- 32: Führungsbacke
- 33: Führungsbacke
- 34: Traggerüst/Portal
- 34a: Säule
- 34b: Tragarm
- 35: Knickarmroboter
- 35a: Aufnahmekopf

## Patentansprüche

1. Antriebseinheit (1) zur Prüfung von Getrieben, umfassend eine von einem Elektromotor antreibbare Antriebswelle (3), die als Hohlwelle ausgebildet ist, welche mit dem zu prüfenden Getriebe kuppelbar ist, **dadurch gekennzeichnet, dass** der Elektromotor auf der Antriebswelle (3) angeordnet und als Spindelmotor (8) ausgebildet ist und durch die als Hohlwelle ausgebildete Antriebswelle (3) eine Betätigungsstange (13) geführt ist.

2. Antriebseinheit nach Anspruch 1, **dadurch gekennzeichnet, dass** der Spindelmotor (8) einen auf der Hohlwelle (3) drehfest angeordneten Rotor (8a) sowie einen Stator (8b) aufweist, welcher in einem Motorgehäuse (9) angeordnet ist.

3. Antriebseinheit nach Anspruch 2, **dadurch gekennzeichnet, dass** das Motorgehäuse (9) stirnseitig durch Deckscheiben (6, 7) abgeschlossen ist, in welchen die Hohlwelle (3) gelagert ist.

4. Antriebseinheit nach Anspruch 2 oder 3, **dadurch gekennzeichn et ,** dass der Stator als Rundkörper (8b) mit integrierten Kühlkanälen (10) ausgebildet ist.

5. Antriebseinheit nach Anspruch 1, **dadurch gekennzeichnet, dass** die Betätigungsstange (13) durch einen Stellmotor (14) verschiebbar ist.

6. Antriebseinheit nach einem der Ansprüche 1 bis 5, **dadurch geken nzeichnet** , dass die Hohlwelle (3) stirnseitig mit einem Kupplungselement (16) und/oder einer Hülse (19) ein- und auskuppelbar ist.

7. Antriebseinheit nach Anspruch 6, **dadurch gekennzeichnet, dass** das Kupplungselement (16) mittels der Betätigungsstange (13) verschiebbar ist.

8. Antriebseinheit nach einem der vorhergehenden Ansprüche, **dadurch gekennzeichnet, dass** die Antriebseinheit (1) sowohl als Antriebsmotor als auch als Abtriebsmotor bei der Getriebeprüfung verwendbar ist.

9. Antriebseinheit nach einem der vorhergehenden Ansprüche, **dadurch gekennzeichnet, dass** die Antriebseinheit (1) an einem Traggerüst (34, 34a, 34b), insbesondere an einem Portal zur Getriebeprüfung befestigbar ist.

10. Antriebseinheit nach einem der Ansprüche 1-8, **dadurch gekennzeichnet, dass** die Antriebseinheit (1) an einem Handhabungsgerät (35), insbesondere einem Knickarmroboter befestigbar ist.

11. Antriebseinheit nach einem der vorhergehenden Ansprüche, **dadurch gekennzeichnet, dass** die Antriebseinheit (1) eine Hubeinrichtung (20) umfasst, über welche die Antriebseinheit (1) gegenüber dem Traggerüst (34, 34a, 34b; 2) oder dem Handhabungsgerät (35, 35a) in Richtung der Längsachse der Hohlwelle (3) verschiebbar ist.

12. Vorrichtung zur Prüfung von Getrieben, **gekennzeichnet durch** die Kombination der Antriebseinheit (1) nach einem der Ansprüche 1 bis 8 mit einem portalähnlichen Traggerüst (34) oder mit einem Handhabungsgerät (35), insbesondere einem Knickarmroboter.

## Claims

1. Drive unit (1) for testing transmissions, comprising a driving shaft (3) which can be driven by an electric motor and which is designed as a hollow shaft which can be coupled to the transmission to be tested, **characterized in that** the electric motor is arranged on the driving shaft (3) and is designed as a spindle motor (8), and an actuating rod (13) is guided through the driving shaft (3) designed as a hollow shaft.

2. Drive unit according to Claim 1, **characterized in that** the spindle motor (8) has a rotor (8a) which is arranged fixedly to the rotation on the hollow shaft (3) and a stator (8b) which is arranged in a motor housing (9).

3. Drive unit according to Claim 2, **characterized in that** the motor housing (9) is closed off on the end faces by means of cover disks (6, 7) in which the hollow shaft (3) is mounted.

4. Drive unit according to Claim 2 or 3, **characterized in that** the stator is designed as a circular body (8b) with integrated cooling ducts (10).

5. Drive unit according to Claim 1, **characterized in that** the actuating rod (13) is displaceable by means of a servomotor (14).

6. Drive unit according to one of Claims 1 to 5, **characterized in that** the hollow shaft (3) can be coupled and uncoupled on the end face to and from a coupling element (16) and/or a sleeve (19).

7. Drive unit according to Claim 6, **characterized in that** the coupling element (16) is displaceable by means of the actuating rod (13).

8. Drive unit according to one of the preceding claims, **characterized in that** the drive unit (1) can be used both as a driving motor and as a driven motor during transmission testing.

9. Drive unit according to one of the preceding claims, **characterized in that** the drive unit (1) can be fastened to a carrying structure (34, 34a, 34b), in particular to a gantry, for transmission testing.

10. Drive unit according to one of Claims 1 to 8, **characterized in that** the drive unit (1) can be fastened to a handling appliance (35), in particular a bending arm robot.

11. Drive unit according to one of the preceding claims, **characterized in that** the drive unit (1) comprises a lifting arrangement (20), via which the drive unit (1) can be displaced with respect to the carrying structure (34, 34a, 34b; 2) or to the handling appliance (35, 35a) in the direction of the longitudinal axis of the hollow shaft (3).

12. Device for testing transmissions, **characterized by** the combination of the drive unit (1) according to one of Claims 1 to 8 with a gantry-like carrying structure (34) or with a handling appliance (35), in particular a bending arm robot.

## Revendications

1. Unité d'entraînement (1) pour le contrôle de transmissions, comprenant un arbre d'entraînement (3) pouvant être entraîné par un moteur électrique, lequel est réalisé sous forme d'arbre creux, qui peut être accouplé à la transmission à contrôler, **caractérisée en ce que** le moteur électrique est disposé sur l'arbre d'entraînement (3) et est réalisé sous forme de moteur à broche (8) et une tige d' actionnement (13) est guidée par l'arbre d'entraînement (3) réalisé sous forme d'arbre creux.

2. Unité d'entraînement selon la revendication 1, **caractérisée en ce que** le moteur à broche (8) présente un rotor (8a) disposé de manière solidaire en rotation sur l'arbre creux (3) ainsi qu'un stator (8b), qui est disposé dans un carter moteur (9).

3. Unité d'entraînement selon la revendication 2, **caractérisée en ce que** le carter moteur (9) est fermé du côté frontal par des disques de recouvrement (6, 7) dans lesquels est supporté l'arbre creux (3).

4. Unité d'entraînement selon la revendication 2 ou 3, **caractérisée en ce que** le stator est réalisé sous forme de corps rond (8b) avec des canaux de refroidissement intégrés (10).

5. Unité d'entraînement selon la revendication 1, **caractérisée en ce que** la tige d'actionnement (13) peut être déplacée par un moteur de réglage (14).

6. Unité d'entraînement selon l'une quelconque des revendications 1 à 5, **caractérisée en ce que** l'arbre creux (3) peut être accouplé et désaccouplé du côté frontal à un élément d'accouplement (16) et/ou à une douille (19).

7. Unité d'entraînement selon la revendication 6, **caractérisée en ce que** l'élément d'accouplement (16) peut être déplacé au moyen de la tige d'actionnement (13).

8. Unité d'entraînement selon l'une quelconque des revendications précédentes, **caractérisée en ce que** l'unité d'entraînement (1) peut être utilisée à la fois comme moteur d'entraînement et comme moteur de prise de force lors du contrôle de transmissions.

9. Unité d'entraînement selon l'une quelconque des revendications précédentes, **caractérisée en ce que** l'unité d'entraînement (1) peut être fixée sur une structure porteuse (34, 34a, 34b), en particulier sur un portique pour le contrôle de transmissions.

10. Unité d'entraînement selon l'une quelconque des revendications 1 à 8, **caractérisée en ce que** l'unité d'entraînement (1) peut être fixée sur un appareil de manipulation (35), en particulier un robot à bras articulé.

11. Unité d'entraînement selon l'une quelconque des revendications précédentes, **caractérisée en ce que** l'unité d'entraînement (1) comprend un dispositif de levage (20) par le biais duquel l'unité d'entraînement (1) peut être déplacée par rapport à la structure porteuse (34, 34a, 34b ; 2) ou par rapport à l'appareil de manipulation (35, 35a) dans la direction de l'axe longitudinal de l'arbre creux (3).

12. Dispositif pour contrôler des transmissions, **caractérisé par** la combinaison de l'unité d'entraînement (1) selon l'une quelconque des revendications 1 à 8 avec une structure porteuse (34) de type portique ou avec un appareil de manipulation (35), en particulier un robot à bras articulé.
